# EUROPÄISCHE PATENTSCHRIFT

(11) **EP 1 549 522 B1**
(45) Veröffentlichungstag und Bekanntmachung des Hinweises auf die Patenterteilung: **28.02.2007**
(21) Anmeldenummer: 03808683.1
(22) Anmeldetag: 30.07.2003
(51) Int. Cl.: B60K 15/04

(54) **BELÜFTUNGSEINRICHTUNG, INSBESONDERE FÜR FLUIDSPEICHERNDE BEHÄLTNISSE, WIE TANKS**
VENTING DEVICE, PARTICULARLY FOR FLUID-STORING RESERVOIRS SUCH AS TANKS
DISPOSITIF DE VENTILATION, NOTAMMENT POUR RECIPIENTS DE STOCKAGE DE FLUIDES, TELS QUE DES RESERVOIRS

(30) Priorität: 12.10.2002 DE 10247712
(43) Veröffentlichungstag der Anmeldung: 06.07.2005
(73) Patentinhaber: HYDAC FILTERTECHNIK GMBH, 66280 Sulzbach/Saar (DE)
(72) Erfinder: SAKRASCHINSKY, Michael, 66386 St. Ingbert (DE); NAUMANN, Peter, 66352 Grossrosseln-Karlsbrunn (DE)
(74) Vertreter: Bartels, Martin Erich Arthur
(86) Internationale Anmeldenummer: PCT/EP2003/008412
(87) Internationale Veröffentlichungsnummer: WO 2004/035343

(56) Entgegenhaltungen:
- GB-A- 1 394 015
- US-A- 5 507 324

## Beschreibung

Die Erfindung betrifft eine Belüftungseinrichtung, insbesondere für fluidspeichernde Behältnisse, wie Tanks, gemäß der Merkmalsausgestaltung des Oberbegriffes des Patentanspruches 1,

Dahingehende Tank-Belüftungseinrichtungen, die regelmäßig mit Filtern versehen sind, verhindern dass die Umgebungsverschmutzung trotz Luftaustausch nicht in das hydraulische System, beginnend mit dem Tank, eindringen kann. Eine unzutreffend ausgelegte Behälterbelüftung kann zu einer starken zusätzlichen Belastung des Filterkreises und damit zur verkürzten Standzeit der Filterelemente führen, so dass die Leistungswerte der Belüftungseinrichtung an die Systemfilter im Hydrosystem anzupassen sind. Insbesondere sind die Tankbelüftungseinrichtungen mit ihren Filtern zur effizienten Abscheidung von Feststoffpartikeln aus der in den Tank nachströmenden Luft konzipiert.

Ferner hat es sich gezeigt, dass im praktischen Einsatz der Belüftungseinrichtungen Tank- und/oder Motorverschmutzungen regelmäßig mit Dampfstrahlgeräten unter Hochdruck vorgenommen werden, mit der Folge, dass Eindringmedien wie Wasser und/oder Reinigungschemikalien über Undichtigkeitsstellen zwischen der Verschlußkappe (Verschlußteil) und dem Verbindungsteil, über das die Belüftungseinrichtung auf den Tank aufsetzbar und mit diesem verbindbar ist, ins Innere der Belüftungseinrichtung und mithin ins Tankinnere eintreten kann, was für die Qualität des bevorrateten Fluids im Tank ausgesprochen nachteilig ist, insbesondere wenn Verschmutzungsteile derart über das Fluid noch mit eingespült werden. Dahingehende Tankbelüftungseinrichtungen mit und ohne Filter sind in einer Vielzahl von Ausführungsformen bekannt und auf dem Markt frei erhältlich. Die dahingehenden Einrichtungen können zusätzlich auch noch mit Einfüllsieben, sogenannten Spin-on-Patronen, Luftentfeuchtern, Adapterstücken etc. ausgerüstet sein.

Durch die US-A-5 507 324 ist eine gattungsgemäße Belüftungseinrichtung bekannt, insbesondere für fluidspeichernde Behältnisse, wie Tanks, mit einem Verbindungsteil für das Erstellen einer luft- und/oder fluidführenden Verbindung mit dem Inneren des Behältnisses und mit einem von dem Verbindungsteil abnehmbaren Verschlußteil, insbesondere in Form einer Verschlußkappe, wobei bei aufgesetztem Verschlußteil zwischen diesem und dem Verbindungsteil mindestens eine Undichtigkeitsstelle in der Art einer Luftaustauschöffnung besteht, wobei mittels einer labyrinthartigen Dichtung die jeweilige Undichtigkeitsstelle zumindest gegenüber Eindringmedien, wie Wasser und/oder Reinigungschemikalien, wirksam abgedichtet ist, jedoch nicht gegenüber einem Luftaustausch für die eigentliche Belüftung, wobei die labyrinthartige Dichtung aus einem System von Dichtungsgängen besteht, von denen ein Teil in der Art einer Sammel- und Abgabestelle das jeweilige Eindringmedium aufnimmt, wobei die jeweilige Sammel- und Abgabestelle Teil eines U-förmigen oder winkelförmigen Dichtungsganges ist, und wobei zumindest in dem U-förmigen Dichtungsgang mindestens ein Dichtsteg des aufgesetzten Verschlußteils eingreift.

Obwohl die bekannte Lösung mittels ihrer Labyrinthdichtung mit U-förmigen oder winkelförmigen Dichtungsgängen die jeweilige Undichtigkeitsstelle gegenüber Eindringmedien abdichten kann und ein Luftaustausch für die eigentliche Belüftung zuläßt, hat es sich gezeigt, dass diese im Hinblick auf eine wirksame Abdichtung gegenüber Eindringmedien, wie Wasser und/oder Reinigungschemikalien, noch Wünsche offen läßt.

Ausgehend von dem vorbeschriebenen Stand der Technik liegt der Erfindung die Aufgabe zugrunde, die bekannten Belüftungseinrichtungen dergestalt weiter zu verbessern, dass etwaige Undichtigkeitsstellen innerhalb der Belüftungseinrichtung sicher gegenüber Eindringmedien jedweder Artaußer gegenüber einem Luftaustausch - wirksam abgedichtet sind. Eine dahingehende Aufgabe löst eine Belüftungseinrichtung mit den Merkmalen des Patentanspruches 1 in seiner Gesamtheit.

Dadurch, dass gemäß dem kennzeichnenden Teil des Patentanspruches 1 für eine wirksame Abdichtung in der vorgesehenen Strömungsrichtung des Eindringmediums hinter dem U-förmigen Dichtungsgang der winkelförmige Dichtungsgang folgt und letzterer in einer großen Anzahl vorhanden ist und dass der jeweilige winkelförmige Dichtungsgang aus der entlang eines Radialumfanges des Verbindungsteils geführten Sammel- und Abgabestelle gebildet ist, in die quer dazu verlaufende Leitkanäle münden, die mit ihrem anderen freien Ende jeweils in Medien führender Verbindung mit dem U-förmigen Dichtungsgang bzw. mit dem Inneren der Belüftungseinrichtung stehen, sind auf diese Art und Weise zwei Dichtungssysteme (U-förmige und winkelförmige Dichtbereiche) innerhalb der einen Labyrinthdichtung erhalten, wobei der Strömungsgang für das jeweilige Eindringmedium im wesentlichen in Ebenen parallel zur Längsachse der Belüftungseinrichtung erfolgt, wobei die zweite Dichteinrichtung so angeordnet ist, dass deren Strömungsweg für das Eindringmedium im wesentlichen senkrecht zur Längsachse der Belüftungseinrichtung verläuft. Somit stehen die Wirkebenen von erstem und zweiten Dichtsystem der Labyrinthdichtung im wesentlichen senkrecht aufeinander, was zu einer starken Strömungsumlenkung für das jeweilige Eindringmedium führt und mithin ist dergestalt der Eindringwiderstand für das Eindringmedium erhöht, was eine hoch beanspruchbare Labyrinthdichtung ergibt mit dennoch zuverlässigem Dichtergebnis. Im Hinblick auf die Vielzahl der Dichtungsgänge ist die Labyrinthdichtung redundant wirkend ausgebildet, d.h. sollte aus irgendwelchen Gründen ein Dichtungsgang noch nicht die gewünschte Abdichtung gewährleisten, wird das Eindringmedium dann von einem nachfolgenden Dichtungsgang sicher aufgehalten.

Ohne die sonstigen Dichtungsgänge mit dem jeweiligen Eindringmedium zu füllen und dergestalt in ihrer Wirksamkeit zu beeinträchtigen, ist über die jeweilige zentrale Sammel- und Abgabestelle die Aufnahme des jeweiligen Eindringmediums gewährleistet, das dann derart zentral gesammelt über eine Abgabemöglichkeit auch aus der Labyrinthdichtung wieder entfernbar ist, insbesondere unter Einbeziehen der auf die Belüftungseinrichtung einwirkenden Schwerkraft. Ohne den Luftaustausch zu beeinträchtigen, d.h. die Verbindung zu der Filtereinrichtung mit der Umgebungsluft, ist dergestalt eine sichere Abdichtung erreicht.
Bei einer bevorzugten Ausführungsform der erfindungsgemäßen Belüftungseinrichtung ist die jeweilige Sammel- und Abgabestelle in bodenseitigen Bereichen des Verbindungsteiles angeordnet, wobei diese quer oder mit einer Ablaufschräge versehen zur Längsachse der Belüftungsachse verlaufen. Durch die bodenseitige Anordnung der jeweiligen Sammel- und Abgabestelle wird die Schwerkraft unter Sammlung von Eindringmedien unterstützt und sofern die genannten Stellen mit Ablaufschrägen versehen sind bzw. diese überhaupt quer zur Längsachse der Belüftungseinrichtung verlaufen, lassen sich über die Abgabestellen die eingebrachten Medien sicher und unmittelbar aus der Belüftungseinrichtung entfernen.

Bei einer weiteren bevorzugten Ausführungsform der erfindungsgemäßen Belüftungseinrichtung springen die Dichtungsstege von einem Dichtungsflansch des Verschlußteiles vor, wobei der Dichtungsflansch beidseits des Dichtungssteges auf zuordenbaren Dichtflächen des Verbindungsteiles aufliegt. Neben der Blockierung über den Dichtungssteg ergibt sich dann auch, eine noch verbesserte Abdichtung über die Dichtungsränder längs des Dichtungsflansches des Verschlußteiles.

Bei einer besonders bevorzugten Ausführungsform der erfindungsgemäßen Belüftungseinrichtung folgt in der möglichen Eindringrichtung des jeweiligen Mediums hinter der Labyrinthdichtung ein Filterelement, das als Teil des Verschlußteils die luft- und fluidführende Verbindung im Inneren des Verbindungsteils im aufgesetzten Zustand des Verschlußteils umgreifen. Über das dahingehende Filterelement läßt die Schmutzbelastung des Systems und mit die Schmutzeindringrate deutlich reduzieren, auch wenn über die Eindringmedien eine dahingehende Verschmutzung in Richtung des Filterelementes in die Tankbelüftungseinrichtung eingebracht werden sollte.

Sofern vorzugsweise das Verschlußteil mit wandseitigen Rastteilen versehen zusammen mit einer flanschartigen Verbreiterung des Ventilteiles eine Rastverbindung in der Art eines Bajonettverschlusses bildet, läßt sich durch einen einfachen Betätigungsgriff von Hand das Verschlußteil vom Verbindungsteil lösen, um beispielsweise über einen Peilstab Auskunft zu erhalten über den Befüllungszustand des Behältnisses (Tanks) und um dergestalt, sofern notwendig, einen Nachfüllvorgang an Fluid zu veranlassen.

Im folgenden wird die erfindungsgemäße Belüftungseinrichtung anhand einer Ausführungsform nach der Zeichnung näher erläutert. Dabei zeigen in prinzipieller und nicht maßstäblicher Darstellung die
- Fig. 1 eine perspektivische Ansicht auf einen Längsschnitt durch die erfindungsgemäße Belüftungseinrichtung;
- Fig. 2 einen Längsschnitt entsprechend der Fig. 1 in direkter Längsansicht.

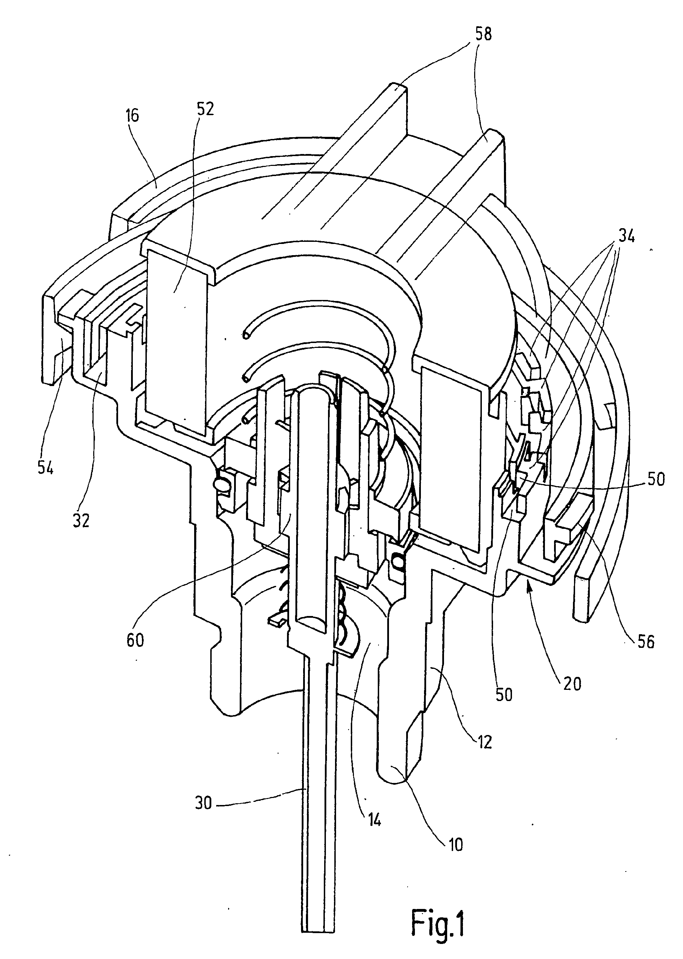

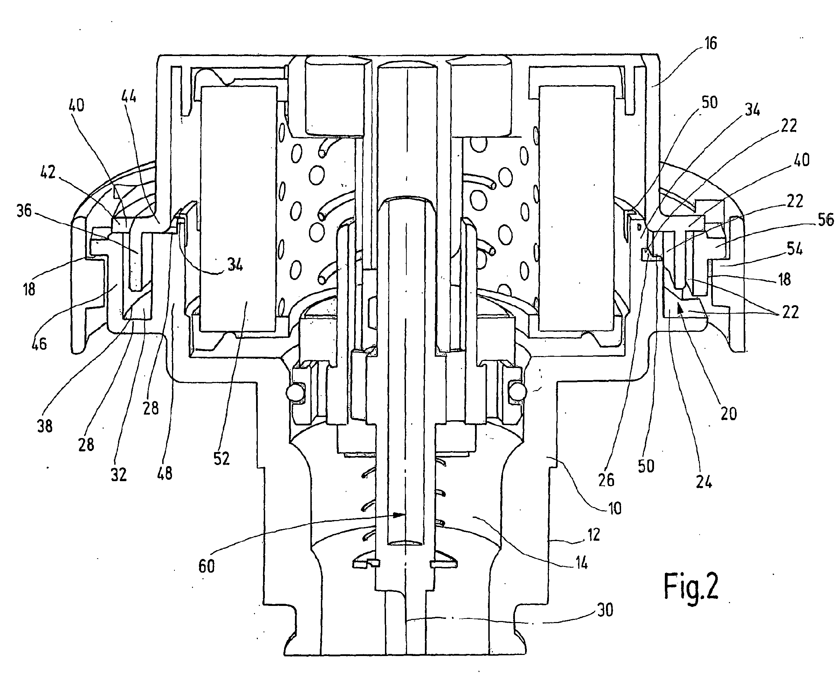

Die Belüftungseinrichtung nach den Fig. 1 und 2 ist insbesondere für fluidspeichernde Behältnisse wie Tanks vorgesehen. Eine dahingehende Behältnis- oder Tankbelüftung ist notwendig, sofern das Gesamtfluidsystem zu seiner Funktion einen Luftaustausch benötigt. Zur Verbindung mit dem Behältnis, wie einem Tank, dient ein Verbindungsteil 10 das gemäß den Darstellungen nach den Fig. sich nach oben hin im Querschnitt absatzartig verbreitert und das Verbindungsteil 10 kann beispielsweise über ein Aussengewinde 12 mit einer Einschraubstrecke im zugeordneten Tank (nicht dargestellt) dichtend verbunden werden. Im Innern weist das Verbindungsteil 10 eine luft- und fluidführende Verbindung 14 auf, die an ihrem einen unteren Ende in das Behältnis oder Tankvolumen mündet. Ferner erweitert sich die Verbindung 14 in ihrem Querschnitt nach oben hin gleichfalls in entsprechend vorgebbaren Stufen. Sofern das Verbindungsteil 10 über die Einschraubstrecke 12 mit dem Behältnis wie einem Tank verbunden ist, steht die Belüftungseinrichtung mit einem vorgebbaren Überstand über das Tankäußere auf seiner Oberseite vor.

Ferner ist die nunmehr näher zu beschreibende Belüftungseinrichtung auch für solche Tankinhalte geeignet, die einen vorgebbaren Vorspanndruck aufweisen, beispielsweise im Umfang von 0,5 bar oder dergleichen. Auf der Oberseite des Verbindungsteiles 10 befindet sich ein abnehmbares Verschlußteil 16 in der Art einer haubenartigen Verschlußkappe, das außenumfangseitig das Verbindungsteil 10 übergreift. Im Bereich der Verbindung zwischen Verbindungsteil 10 und Verschlußteil 16 können Undichtigkeitsstellen 18 vorhanden sein (vgl. Fig. 2), wobei die dahingehende Undichtigkeitsstellen 18 über eine als Ganzes mit 20 bezeichnete Labyrinthdichtung sich abdichten lassen. Insbesondere ist es mittels der labyrinthartigen Dichtung 20 möglich, die jeweilige Undichtigkeitsstelle 18 zumindest gegen Eindringmedien wie Wasser und/oder Reinigungschemikalien in abdichtender Weise wirksam auszubilden, was im folgenden noch näher erläutert werden wird.

Die labyrinthartige Dichtung 20 besteht aus einem System mit einer Vielzahl an Dichtungsgängen 22, von denen ein Teil in der Art einer Sammel- und Abgabestelle 24, 26 das jeweilige Eindringmedium aufnehmen. Wie des weiteren die Fig. 2 zeigt, ist die jeweilige Sammel- und Abgabestelle 24, 26 in bodenseitigen Bereichen des Verbindungsteiles 10 angeordnet. Bei einer nicht näher dargestellten Ausführungsform können die dahingehenden Bodenbereiche 28 mit einer Ablaufschräge versehen sein, um den Abtransport etwaig eingedrungenen flüssigen Eindringmediums zu beschleunigen und zu erleichtern. Ferner können die Bodenbereiche 28 mit sie durchgreifenden Durchlässen, beispielsweise in Form von Bohrungen (nicht dargestellt) versehen sein, um so eine Möglichkeit zu schaffen, das eingedrungene Medium über die Durchlässe im Verbindungsteil 10 wieder nach außen abzuführen. Letzteres ist insbesondere dann geboten, wenn beispielsweise durch den Einsatz eines Dampfreinigungsgerätes unter Hochdruck das Eindringmedium in Form von Heißdampf - auch unter Zusatz von Reinigungschemikalien - in großer Menge auf die Belüftungseinrichtung aufgebracht wird. Das derart stark korrosiv wirkende Medium kann dann über die Labyrinthdichtung 20 größtenteils abgehalten werden und etwaig eindringendes Medium wird dann sicher über die Sammel- und Abgabestellen 24, 26 mit Perforationen (nicht dargestellt) wieder aus der Belüftungseinrichtung abgeführt. In Abhängigkeit des Anwendungszweckes kann es auch genügen, auf die dahingehenden Durchlaßstellen im Bodenbereich 28 vollständig zu verzichten, oder beispielsweise nur die radial zuäußerst liegenden Bodenbereiche mit einer dahingehenden Abgabemöglichkeit für das Eindringmedium zu versehen. Ferner bleibt festzustellen, dass die bodenseitigen Bereiche 28 des Verbindungsteiles 10 und somit die Sammel- und Abgabestellen 24, 26 entlang von ringförmigen Flächen um die Längsachse 30 der Belüftungseinrichtung konzentrisch geführt sind sowie quer zu der dahingehenden Längsachse 30 verlaufen.

Wie insbesondere die Fig. 1 zeigt, ist die jeweilige Sammel- und Abgabestelle 24, 26 Teil eines U-förmigen Dichtungsganges 32 oder von winkelförmigen Dichtungsgängen 34. Dabei greift in den U-förmigen Dichtungsgang 32 des ersten Teils der Labyrinthdichtung 20 ein radial umlaufender Dichtsteg 36 des Verschlußteiles 16 in die nutförmige Ausnehmung 38 (vgl. Fig. 2) ein. Neben einem radial vorstehenden Dichtsteg 36 könnten auch mehrere segmentartig hintereinander angeordnete Dichtstege des Gesamtverschlußteils 16 eine erste Hemmung in Richtung des möglichen Eindringens für das jeweilige Eindringmedium bilden. Der Dichtungssteg 36 springt nach unten hin ausgehend von einem Dichtungsflansch 40 vor, der flanschartig seitlich von dem kappenartigen Verschlußteil 16 vorsteht und dergestalt gleichfalls quer zur Längsachse 30 der Belüftungseinrichtung verläuft. Beidseitig des Dichtungsflansches 40 verlaufend und durch den in etwa mittig verlaufenden Dichtsteg 36 getrennt, weist dieser zwei Dichtflächen 42, 44 auf. Mit der zu äußerst angeordneten radialen Dichtfläche 42 ist, in Blickrichtung auf die Fig. 2 gesehen, der Dichtungsflansch 40 in Anlage mit dem zu äußerst angeordneten Wandteil 46, der im übrigen die nutartige Ausnehmung 38 nach außen hin begrenzt. Die zweite Dichtfläche 44 liegt wiederum an einer vertikal verlaufenden Wand 48 an, die nach Innen hin die Ausnehmungsnut 38 begrenzt und die an ihrer Oberseite Einschnitte für die winkelförmigen Dichtungsgänge 34 des zweiten Teils der Labyrinthdichtung 20 aufweist. Die dichtenden Flächen zwischen Dichtfläche 42 und Wandteil 46 sowie zwischen Dichtfläche 44 und Wand 48 liegen somit im wesentlichen in einer Ebene quer zur Längsachse 30 der Belüftungseinrichtung.

In der möglichen vorgesehenen Strömungsrichtung des Eindringmediums folgt hinter dem U-förmigen Dichtungsgang 32 der winkelförmige Dichtungsgang 34 in einer vorgebbaren Vielzahl nach, wobei die dahingehenden Dichtungsgänge 34 sich insbesondere aus der Darstellung nach der Fig. 1 ergeben. Der jeweilige winkelförmige Dichtungsgang 34 ist aus der entlang eines Radialumfanges des Verbindungsteiles 10 geführten Sammel- und Abgabestelle 26 bodenseitig jeweils gebildet und in diesen münden quer dazu verlaufende Leitkanäle 50, die mit ihrem jeweils anderen freien Ende in Medienführende Verbindung mit dem U-förmigen Dichtungsgang 32 bzw. mit dem Inneren der Belüftungseinrichtung stehen, in Form der Verbindung 14. Wie sich aus der Längsschnittdarstellung aus der Fig. 1 ergibt, erfolgt also eine erste Umlenkung für das Eindringmedium über den U-förmigen Dichtungsgang 32 in Ebenen im wesentlichen parallel zur Längsachse 30 der Einrichtung und die zweite, weitere Dichtung in Form der Winkeldichtungsgänge 34 übernimmt eine Fluidführung im wesentlichen quer dazu und quer zur Längsachse 30 verlaufend. Sofern für die zweite Sammel- und Abgabestelle 26 eine Ablaufschräge vorgesehen sein sollte, kann deren Schrägverlauf in Richtung des Bodenbereiches 28 mit der ersten Sammel- und Abgabestelle 24 erfolgen, um dergestalt gesammeltes Eindringmedium nach außen abzugeben, insbesondere wenn nur die zuäußerst angeordnete Sammel- und Abgabestelle 24 über entsprechende Abgabeperforationen (nicht dargestellt) verfügen sollte.

In der möglichen Eindringrichtung des jeweiligen Mediums folgt hinter der eigentlichen Labyrinthdichtung 20 ein Filterelement 52 üblicher Bauart, so dass an dieser Stelle auf den dahingehenden Aufbau des Filterlementes nicht mehr näher Bezug genommen wird. Zur Filtration des eintretenden Luftstroms ist das Filterelement 52 jedenfalls Teil des kappenartigen Verschlußteiles 16 und umfaßt radial die luft- und fluidführende Verbindung 14 im Inneren des Verbindungsteiles 10, sofern das Verschlußteil 16 in seiner Einbaulage gemäß den Darstellungen aufgesetzt ist. Für die dahingehende Verbindung ist das Verschlußteil 16 mit randseitigen Rastteilen 54 versehen, so dass zusammen mit der flanschartigen Verbreiterung 56 des Verbindungsteiles 10 eine Rastverbindung in der Art eines von Hand lösbaren Bajonettverschlusses gebildet ist. Zur Erleichterung des dahingehenden "Auf- und Abschraubvorganges" kann auf der Oberseite des Verschlußteiles 16 eine Handhabe 58 dienen.

Wird das Verschlußteil 16 vom Verbindungsteil 10 abgenommen, wird das im Verschlußteil 16 integrierte Filterelement 52 mit vom Verbindungsteil 10 entfernt, zusammen mit einer Ventil- und Peilstabeinrichtung 60. Dergestalt läßt sich dann über den Peilstab Aussagen über die Fluidmenge treffen die im Inneren des Behältnisses, wie einem Tank, noch bevorratet ist. Ein entsprechender Nachfüllvorgang an Fluid (Hydraulikmedium) wird dann über die Verbindung 14 im Verbindungsteil 10 bei Bedarf durchgeführt.

Mit der Labyrinthdichtung 20 als Ganzes ist jedenfalls eine sichere Abdichtung über Fluid- und Dichtungskanäle sowie -gänge erreicht und auch bei einer Hochdruckreinigungsbehandlung mit Heißdampf ist dergestalt mit Sicherheit ausgeschlossen, dass ungewollt korrosives Eindringmedium (Heißdampf mit Chemikalien versetzt) in das Innere der Belüftungseinrichtung dringen kann und mithin in Kontakt kommt mit der bevorrateten Fluidmenge innerhalb des Tanks (nicht dargestellt).

## Patentansprüche

1. Belüftungseinrichtung, insbesondere für fluidspeichernde Behältnisse, wie Tanks, mit einem Verbindungsteil (10) für das Erstellen einer luft- und/oder fluidführenden Verbindung (14) mit dem Inneren des Behältnisses und mit einem von dem Verbindungsteil (10) abnehmbaren Verschlußteil (16), insbesondere in Form einer Verschlußkappe, wobei bei aufgesetztem Verschlußteil (16) zwischen diesem und dem Verbindungsteil (10) mindestens eine Undichtigkeitsstelle (18) in der Art einer Luftaustauschöffnung besteht, wobei mittels einer labyrinthartigen Dichtung (20) die jeweilige Undichtigkeitsstelle (18) zumindest gegenüber Eindringmedien wie Wasser und/oder Reinigungschemikalien abgedichtet ist, jedoch nicht gegenüber einem Luftaustausch für die eigentliche Belüftung, wobei die labyrinthartige Dichtung (20) aus einem System von Dichtungsgängen (22) besteht, von denen ein Teil in der Art einer Sammel- und Abgabestelle (24, 26) das jeweilige Eindringmedium aufnimmt, wobei die jeweilige Sammel- und Abgabestelle (24,26) Teil eines U-förmigen oder winkelförmigen Dichtungsganges (32,34) ist, und wobei zumindest in dem U-förmigen Dichtungsgang (32) mindestens ein Dichtsteg (36) des aufgesetzten Verschlußteils (16) eingreift, **dadurch gekennzeichnet, dass** für eine wirksame Abdichtung in der vorgesehenen Strömungsrichtung des Eindringmediums hinter dem U-förmigen Dichtungsgang (32) der winkelförmige Dichtungsgang (34) folgt und letzterer in einer großen Anzahl vorhanden ist und dass der jeweilige winkelförmige Dichtungsgang (34) aus der entlang eines Radialumfanges des Verbindungsteils (10) geführten Sammel- und Abgabestelle (26) gebildet ist, in die quer dazu verlaufende Leitkanäle (50) münden, die mit ihrem anderen freien Ende jeweils in Medien führender Verbindung mit dem U-förmigen Dichtungsgang (32) bzw. mit dem Inneren der Belüftungseinrichtung stehen.

2. Belüftungseinrichtung nach Anspruch 1, **dadurch gekennzeichnet, dass** die Sammel- und Abgabestelle (24, 26) in bodenseitigen Bereichen (28) des Verbindungsteiles (10) angeordnet ist und dass diese quer oder mit einer Ablaufschräge versehen zur Längsachse (30) der Belüftungseinrichtung verlaufen.

3. Belüftungseinrichtung nach Anspruch 1 oder 2, **dadurch gekennzeichnet, dass** der Dichtungssteg (36) von einem Dichtungsflansch (40) des Verschlußteiles (16) vorspringt und dass der Dichtungsflansch (40) beidseits des Dichtungssteges (36) auf zuordenbare Dichtflächen (46, 48) des Verbindungsteils (10) aufliegt.

4. Belüftungseinrichtung nach einem der Ansprüche 1 bis 3, **dadurch gekennzeichnet, dass** in der möglichen Eindringrichtung des jeweiligen Mediums hinter der Labyrinthdichtung (20) ein Filterelement (52) folgt, das als Teil des Verschlußteils (16) die luft- und fluidführende Verbindung (14) im Inneren des Verbindungsteils (10) im aufgesetzten Zustand umgreift.

5. Belüftungseinrichtung nach einem der Ansprüche 1 bis 4, **dadurch gekennzeichnet, dass** das Verschlußteil (16) mit den wandseitigen Rastteilen (54) versehen zusammen mit einer flanschartigen Verbreiterung des Verbindungsteils (10) eine Rastverbindung in der Art eines BajonettVerschlusses bildet.

## Claims

1. Ventilation means, in particular for fluid storing containers such as tanks, with a connection part (10) for creating an air and/or fluid conveying connection (14) with the interior of the container, and with a closure part (16) that can be removed from the connection part (10), in particular in the form of a closure cap, whereby at least one non-tight point (18) of the type of an air exchange opening is located between the closure part (16) and the connection part (10) when the same is affixed, whereby at least one labyrinth-like seal (20) seals the relevant non-tight point (18) at least against incoming media such as water and/or cleaning chemicals, but not against an air exchange for the actual ventilation, whereby the labyrinth-like seal (20) consists of a system of sealing steps (22) of which a part receives the relevant incoming medium in the way of a collection and distribution point (24, 26), whereby the relevant collection and distribution point (24, 26) forms a part of a U-shaped or angled sealing step (32, 34), and whereby at least one sealing bridge (36) of the affixed closure part (16) engages the U-shaped sealing step (32), **characterised in that** the angled sealing step (34) follows behind the U-shaped sealing step (32) for an effective sealing in the envisaged flow direction of the incoming medium, and **in that** the latter is provided in great quantities, and **in that** the relevant angled sealing step (34) is formed by the collection and distribution point (26) along a radial circumference of the connection part (10) and opens out into the guide channels (50) extending transverse to the same, which each stand in medium conveying connection with their other free end via the U-shaped sealing step (32), i.e. with the interior of the ventilation means.

2. Ventilation means according to Claim 1, **characterised in that** the collection and distribution point (24, 26) is located in the floor area (28) of the connection part (10), and **in that** the same extends transverse to the longitudinal axis (30) of the ventilation means or is equipped with a drainage slope.

3. Ventilation means according to Claim 1 or 2, **characterised in that** the sealing bridge (36) projects from a sealing flange (40) of the closure part (16), and **in that** the sealing flange (40) lies on associated sealing surfaces (46, 48) of the connection part (10) on both sides of the sealing bridge (36).

4. Ventilation means according to one of the Claims 1 to 3, **characterised in that** in the possible ingress direction of the relevant medium a filter element (52) follows after the labyrinth seal (20), the same enclosing the air and fluid conveying connection (14) inside the connection part (10) in the affixed condition as part of the closure part (16).

5. Ventilation means according to one of the Claims 1 to 4, **characterised in that** the closure part (16) equipped with the wall side arresting means (54) forms an arresting connection of the type of a bayonet closure together with a flange-like widening of the connection part (10).

## Revendications

1. Dispositif de ventilation, en particulier pour des récipients qui contiennent un fluide, comme des réservoirs, comportant une pièce de liaison (10) pour établir une liaison (14) conductrice d'air et/ou de fluide avec l'intérieur du récipient et une pièce de fermeture (16) qui peut être retirée de la pièce de liaison (10), en particulier sous forme d'un capuchon, dans ce dispositif
- quand la pièce de fermeture (16) est posée, au moins un point non étanche (18) sous forme d'une ouverture d'échange d'air se trouve entre la pièce de fermeture et la pièce de liaison (10),
- grâce à une étanchéité en labyrinthe (20) le point non étanche (18) concerné est étanche au moins à des fluides entrants comme l'eau et/ou des produits chimiques de nettoyage mais pas à un échange d'air qui sert à la ventilation elle-même,
- l'étanchéité en labyrinthe (20) est un système de voies d'étanchéité (22), dont une partie sous forme de point collecteur et distributeur (24, 26) reçoit le fluide entrant concerné,
- chaque point collecteur et distributeur (24, 26) fait partie d'un couloir d'étanchéité (32, 34) en U ou en angle,
- et au moins une nervure d'étanchéité (36) de la pièce de fermeture (16) posée pénètre au moins dans le couloir d'étanchéité (32) en U,
**caractérisé en ce que**, pour que l'étanchéité soit efficace, le couloir d'étanchéité en angle (34), qui existe en un grand nombre, se trouve en aval du couloir d'étanchéité en U (32) dans la direction où on prévoit que s'écoule le fluide entrant et **en ce que** chaque couloir d'étanchéité en angle (34) est formé dans le point collecteur et distributeur (26) qui suit une périphérie radiale de la pièce de liaison (10) et dans lequel débouchent des canaux conducteurs (50), transversaux par rapport à lui, dont l'autre extrémité libre est en liaison conductrice de fluide avec le couloir d'étanchéité en U (32) ou avec l'intérieur du dispositif de ventilation.

2. Dispositif de ventilation selon la revendication 1, **caractérisé en ce que** le point collecteur et distributeur (24, 26) se trouve dans des zones (28) inférieures de la pièce de liaison (10) et **en ce que** ces zones sont transversales à l'axe longitudinal (30) du dispositif de ventilation ou sont munies d'une inclinaison d'écoulement.

3. Dispositif de ventilation selon la revendication 1 ou 2, **caractérisé en ce que** la nervure d'étanchéité (36) dépasse d'une bride d'étanchéité (40) de la pièce de fermeture (16) et que, de chaque côté de la nervure d'étanchéité (36), la bride d'étanchéité (40) repose sur des surfaces étanches (46, 48) associables de la pièce de liaison (10).

4. Dispositif de ventilation selon l'une des revendications 1 à 3, **caractérisé en ce que**, dans la direction où le fluide concerné peut entrer, un élément filtrant (52) succède à l'étanchéité en labyrinthe (20) et à l'état posé entoure, sous forme de partie de la pièce de fermeture (16), la liaison (14) conductrice d'air et de fluide à l'intérieur de la pièce de liaison (10).

5. Dispositif de ventilation selon l'une des revendications 1 à 4, **caractérisé en ce que** la pièce de fermeture (16) est équipée côté paroi de pièces de blocage (54) et forme conjointement avec un élargissement en bride de la pièce de liaison (10) une liaison de blocage semblable à une fermeture à baïonnette.
